(19) Europäisches Patentamt
European Patent Office
Office européen des brevets

(11) Publication number: 0 097 509
B1

(12) **EUROPEAN PATENT SPECIFICATION**

(45) Date of publication of patent specification: 30.03.88

(51) Int. Cl.[4]: G 11 B 7/24

(21) Application number: 83303529.8

(22) Date of filing: 20.06.83

# (54) Erasable recording medium comprising a dimer acid polyamide resin.

(30) Priority: 21.06.82 US 390162

(43) Date of publication of application: 04.01.84 Bulletin 84/01

(45) Publication of the grant of the patent: 30.03.88 Bulletin 88/13

(84) Designated Contracting States: BE DE FR GB IT NL

(56) References cited:
EP-A-0 003 262
EP-A-0 046 413
EP-A-0 097 510

(73) Proprietor: CELANESE CORPORATION
1211 Avenue of the Americas
New York New York 10036 (US)

(72) Inventor: Kuder, James E.
91 Willoughby Road
Fanwood New Jersey (US)
Inventor: East, Anthony J.
62 Niles Avenue
Madison New Jersey (US)

(74) Representative: De Minvielle-Devaux, Ian Benedict Peter et al
CARPMAELS & RANSFORD
43 Bloomsbury Square
London WC1A 2RA (GB)

EP 0 097 509 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to an erasable ablative recording medium, suitable for the recording of information by means of light of predetermined frequency, as well as a method of recording information thereon and a method of erasing recorded information therefrom.

The invention therefore relates to a novel optical information recording medium and the recording of information thereon, more particularly to an information recording medium, preferably in the form of a disc, suitable for use with optical recording and playback apparatus, which recording medium is stable yet readily and accurately erasable.

European patent application No. 0 097 510 (application 83303530.6 having the same priority date as the present application) discloses an ablative recording medium, suitable for use with a recording laser, comprising a thermally stable substrate and a recording polymer layer coated thereon, wherein the polymer of the polymer layer has: (i) a Vicat softening point of 45 to 120°C; (ii) a surface tension, measured in N/m, and a melt viscosity, measured in Pa.s, in the temperature range from 140 to 200°C such that the ratio of said surface tension to melt viscosity at some point within said temperature range is at least 1:50; and (iii) a temperature for the onset of thermal degradation of at least 250°C.

Various optical recording media and methods for recording information thereon are known. For example, the recording of information in the form of deformations or ripples in a thermoplastic film is known, with techniques for achieving such deformations involving the steps of (1) forming a charge pattern on the surface of the thermoplastic film in accordance with the information to be recorded, (2) heating the thermoplastic film to its melting point so as to permit the electrostatic forces produced by the charges to form a deformation pattern in the thermoplastic film corresponding to the charge pattern and thus to the information to be recorded, and (3) then cooling the thermoplastic film below its melting point to fix the thus-formed deformation pattern in the film. Reading of the information represented by the deformation pattern in the thermoplastic film may be accomplished using well known optical techniques. See, e.g., U.S. Patent No: 3,952,146.

Techniques for erasing the deformation pattern involve reheating the thermoplastic film above its melting point to a significantly higher temperature than during recording in order to permit surface tension to smooth out the surface. Selective erasure may be accomplished by confining the heating to a selective area. After cooling, another deformation pattern may be recorded in the thermoplastic film.

Clemens, in U.S. Patents No: 3,842,194, 3,842,217 and 3,909,517, describes a conductive video disc comprising a moulded plastic disc having video and audio information in the form of geometric variations in a spiral groove in the disc surface. These discs are coated first with a conductive material, such as a metal, which acts as a first electrode, and then with a dielectric layer, such as an inert polymer layer. A metal-tipped stylus acts as a second electrode of a capacitor and the information signals are monitored by the stylus which notes changes in capacitance between the stylus and the disc surface as the information, in the form of depressions, passes beneath the stylus when relative motion is established between the disc and the stylus.

Optical recording methods in which light from a laser is focused upon the surface of a recording medium with sufficient intensity to cause ablation of surface material have also been proposed. In such methods, an information representative pattern of pits may be formed in the surface of the recording medium by suitably controlling the intensity of the focused light in accordance with the information to be recorded while relative motion is established between the recording medium and the focused light spot.

For instance, in recent years, attention has been increasingly paid to the information recording method in which information is written in a thin film of metal or the like formed on a substrate by using a laser ray or beam. According to such a method, the information recording has been accomplished by forming holes or recesses in the metallic thin film under the action of a thermal energy beam such as a laser ray. See, e.g., U.S. Patent No: 4,238,803.

Spong, U.S. Patent No: 4,097,895, described a recording medium which comprises a light-reflecting material, such as aluminum or gold, coated with a light-absorbing layer, such as fluorescein, which is operative with an argon laser light source. The thickness of the light-absorbing layer is chosen so that the structure has minimum reflectivity. An incident light beam then ablates, vaporises or melts the light-absorbing layer, leaving a hole and exposing the light-reflecting layer. After recording at the wavelength of the recording light, maximum contrast between the minimum reflectance of the light-absorbing layer and the reflectance of the light-reflecting layer exists. In this regard, note also U.S. Patent No: 4,219,826.

Carlson, in U.S. Patent No: 3,475,760, discloses a system for directly recording information in a thermoplastic film as a deformation by using a high energy laser scanning beam of small diameter. Erasure of the film deformation is accomplished by recording over the information to be erased using a similar laser beam but with a much smaller scan line spacing, preferably so as to provide overlap of the scan lines. Suitable thermoplastic films are disclosed as being vinyl-toluenebutadiene, polystyrene ortho-terphenyl, polyethylene and nitrocellulose.

The recording medium, of course, is one of the key elements in any optical and/or audio recording system, and this is particularly true in the home entertainment market where erasable recording discs would be a very desirable product, provided the recording discs could match the commercial magnetic tapes with regard to the technical parameters and the economics of a recording medium. Although many

different media have been investigated for possible use in the various aforediscussed recording systems, and in particular the laser systems, a suitable recording medium or disc which is stable and economical, yet readily erasable when desired, has hitherto not been provided. Such a recording medium, and in particular if in the form of a disc, would be readily accepted and would fill a void in the video recording marketplace.

The present invention provides a significant advance in these respects.

The present invention provides a new and surprising recording medium, which is ablative and erasable (information recorded thereon may be readily erased and, if desired, other information recorded instead). The medium is an optical medium suitable for use with recording and reading beams of light of determined frequency (e.g. lasers). The medium may, for example, be in the form of a disc.

The invention involves the use of a thermally stable substrate and a polymer layer coated thereon. Such an arrangement is known, but it is a new and surprising feature of the invention to use as polymer layer a dimer acid polyamide; moreover, the dimer acid polyamide must have either a weight average molecular weight of 2000 to 20000, or it must have a surface tension and a melt viscosity in the temperature range of 140 to 200°C such that, if the surface tension is expressed in N/m (dynes/cm) and the melt viscosity is expressed in Pa.s (poise), then the ratio of surface tension to melt viscosity at some temperature within the said range is at least 1:50 (2:1). In general, both these criteria are satisfied.

The invention also provides a method of producing a recording by irradiating the dimer acid polyamide of the recording medium with a recording beam of light whereby information is recorded as deformations in the dimer acid polyamide layer. The invention also provides a method of erasing such recorded information from such a recording by heating the dimer acid polyamide layer, such heating being generally such as to effect levelling of the dimer acid polyamide layer in the area corresponding to the information to be erased.

In accordance with known practice, the substrate may be relatively thick, and the dimer acid polyamide layer may be a relatively thin layer, such as a film.

The particular multi-layer structure of the present invention has a surprising applicability as an erasable information recording medium as it has excellent dimensional and mechanical stability on storage, readily and easily records information and yet has an ability to be readily and quickly erased when erasure is desired.

The present invention makes it possible to achieve a number of significant advantages, among which are the following:

The invention provides a novel optical recording medium which is stable, yet readily and accurately erasable when desired.

The invention provides a novel erasable recording medium upon which information may be recorded as a deformation and wherein this information can easily be erased, thereby providing a blank recording medium upon which information can again be recorded.

The invention provides an erasable recording medium, particularly useful for video recordings, which comprises a polymeric layer exhibiting specifically selected properties to render the recording and erasing of information from the recording medium most effective and economic.

The invention provides an erasable recording disc comprising a uniquely-suited polymer layer which renders the recording and erasing of information technically accurate and economically expedient.

It is preferable that the dimer acid polyamide polymer employed in the polymer layer of the erasable recording medium of the present invention be soluble in conventional organic solvents, yet be insoluble in water. The dimer acid polyamide polymer should also preferably be capable of forming a thin film and be optically homogeneous and non-scattering upon forming said film, and should adhere well to the substrate.

In a preferred embodiment of the present invention the layer comprising the dimer acid polyamide further comprises a dye which is absorptive at the light frequency of the predetermined recording light source.

The polymers employed in the polymer layer of the erasable recording medium of the present invention are lower molecular weight dimer acid polyamides. Such polyamide resins are manufactured conventionally by reacting dimer acids, or their esters, with diamines, and can be obtained commercially. Such polymers, however, have not heretofore been recognised as being suitable for use in erasable information recording media.

The uniquely suitable dimer acid polyamides employed in the present invention are of sufficiently low molecular weight so that the polyamide resin exhibits a sufficiently low melt viscosity (measured in Pa.s (poise)) in the temperature range of from 140 to 200°C such that the ratio of surface tension of the resin (measured in N/m (dynes/cm)) to melt viscosity at some point in said temperature range is at least 1:50 (2:1). In general, the suitable dimer acid polyamide resins exhibit a weight average molecular weight in the range of from 2,000 to 20,000. However, it is more preferable that the dimer acid polyamide resin employed have a weight average molecular weight in the range of from 2,500 to 18,000 and most preferably of from 3,000 to 16,000.

Such low molecular weight dimer acid polyamides are surprisingly well suited for use in an erasable recording medium due to the polymers exhibiting the low melt viscosity, and hence the combined properties of surface tension and viscosity such that the resin has a ratio of surface tension to viscosity of at least 1:50 (2:1), more preferably of at least 1:20 (5:1), and most preferably of at least 1:6·25 (8:1) at some

point in the temperature range of from 140°C to 200°C. This ratio (in m/s (cm/sec)) of surface tension (as measured in N/m (dynes/cm)) to melt viscosity (as measured in Pa.s (poise)) is believed to signify the capability of a polymer film of the polymer to be erased, i.e. smoothed by levelling, as the rate of erasure is believed to be generally proportional to the surface tension of the polymer and inversely proportional to the melt viscosity of the polymer at the temperature of erasure. By exhibiting the aforementioned surface tension to viscosity ratio, an extremely fast erasure rate is ensured, e.g. up to $10^5$ bits/sec or more. Such a high erasure rate is extremely important for commercial erasable recording media, such as optical discs, in order to ensure that proper and complete erasure of the information is attained when desired in a very short time and in a facile manner. Without such a capability for a quick, easy and complete erasure, the technical aspects and hence commercial viability of the product would be adversely affected. The use of low molecular weight dimer acid polyamides in accordance with the present invention, however, provides such a capability.

Moreover, the ability of the dimer acid polyamides to have such a surface tension to melt viscosity ratio in the low temperature range of from 140 to 200°C, and most preferably from 150 to 180°C, essentially precludes the possibility of writing during erasure since the erasure levelling occurs at a temperature well below the thermal degradation (or writing) temperature. Advantageously, the expenditure of energy for erasure is also of a relatively limited nature due to the capability of erasure of recorded information at such a low temperature. Yet, the erasure temperature for the recording medium of the present invention is still thereby sufficiently above normal ambient temperatures that recorded information is not inadvertently erased by levelling upon storage or upon scanning with a low intensity read laser beam.

Generally, it is preferred that the dimer acid polyamide exhibit a melt viscosity of approximately 5 poise or less at some point within the temperature range of 140°C to 200°C. Accordingly, the polymer film should exhibit a surface tension of at least $10^{-2}$ N/m (10 dynes/cm), and more preferably at least $2.5 \times 10^{-2}$ N/m (25 dynes/cm), in order to achieve the desired erasure and erasure rates, which would be achieved at the temperature(s) that the dimer acid polyamide film exhibits a viscosity of approximately 0.5 Pa.s (5 poise). It should be understood that the polymer film need not exhibit the aforementioned surface tension to viscosity ratio throughout the entire defined temperature range in order to realise the benefits thereof, but only at some point therein.

The dimer acid polyamide resins employed in accordance with the present invention are also uniquely suited for use in the encoding layer for they generally exhibit a Vicat softening point in the range of from 45° to 120°C, even more preferably in the range of from 50°C to 100°C, and most preferably in the range of from 60°C to 80°C, with the softening point being an important property in regard to the dimensional stability of the recording medium upon storage. The possession of such a Vicat softening point ensures that the polymer layer will remain dimensionally stable for normal variations in ambient temperature, and hence provides a permanent record upon storage. The Vicat softening point of a polymer can be measured in accordance with standard defined test procedures, e.g. ASTM D1525—76.

Further with regard to dimensional stability, the dimer acid polyamides of the present invention are preferably essentially insoluble in water so that the polymer layer does not swell in a humid environment. A recording disc of the present invention should thus be unaffected by normal variations in humidity.

The lower molecular weight dimer acid polyamides employed in the present invention also generally exhibit a third physical- chemical property which, in combination with the Vicat softening point and surface tension to melt viscosity ratio, make them so suitable for use in the erasable recording medium of the present invention. The temperature for the onset of thermal degradation, for example, as measured by thermogravimetric analysis and defined for the purposes of the present invention as that temperature at which a sample loses 10 percent of its original weight is generally at least 250°C for the dimer acid polyamides employed in the erasable recording medium of the present invention. More preferably, the temperature of thermal degradation is at least 300°C, but generally no greater than 500°C. Accordingly, the thermal degradation temperature of the dimer acid polyamides sufficiently exceeds the erasure temperature range, e.g., up to 200°C, so that no writing occurs during the erasure of information. This also provides for an important advantage, for if the temperature at which erasure can occur is too close to the thermal degradation temperature, problems with respect to the ease, completeness and quality of the erasure would be encountered.

The polymer film comprising the dimer acid polyamides of the present invention also undergoes thermal degradation with a minimal amount of charring and with a minimal amount of residue being left, e.g. 2% or less. This allows the erasable recording medium surface to remain free of extraneous debris, etc. throughout the various erasure-recording sequences to which the recording medium may be subjected. Being free of debris results in less scattering of light and less noise, i.e., a higher signal to noise ratio is achieved. The technical aspects of the recording medium are thereby more acceptable and commercially viable.

The dimer acid polyamides are preferably optically homogeneous and do not scatter light. The more optically homogeneous the polymer of a recording layer, of course, the better the technical parameters, e.g., higher resolution and/or information density, of the recording medium. This advantageous optical homogeneity of the dimer acid polyamides is believed to be due to their lack of crystallinity. Linear chain polyamides, such as the nylons, are highly crystalline and hence of an opaque nature. The dimer acid polyamides of the present invention, however, are not of a crystalline or ordered structure due to the particular

predominant structure of the dimer acid polyamides, which comprises a cyclic ring with aliphatic side chains attached thereto.

Preparation of the dimer acid polyamides employed in the invention can be carried out in the conventional manner by reacting substantially equivalent amounts of the diamines with the dimer acids or the amide-forming derivatives thereof, especially their esters, at condensation temperatures between 160°C and 250°C. The residual water of condensation can be advantageously removed by applying a vacuum e.g. of 15—20 mm Hg for 1 to 2 hours. The polymerisation is conducted until a dimer acid polyamide product of the desired (or suitable) molecular weight is attained.

As mentioned, instead of the free acids it is also possible to use, in the conventional manner, their amide-forming derivatives, especially their acid esters, the natural choice being those that can readily be subjected to aminolysis, for example, methyl esters and ethyl esters.

The dimeric carboxylic acids used in the manufacture of the polyamides of the present invention can be prepared in known manners. See, for example, *Encyclopedia of Chemical Technology,* Kirk-Othmer, 3rd ed., Vol. 7, pp. 768 et seq,. and articles referenced therein. Generally, the dimer acids can be prepared, for example, by radical or ionic polymerisation or by thermal polymerisation. The starting materials used in such polymerisation processes are natural monoethylenic or polyethylenic carboxylic acids and possibly also saturated or monoacetylenic polyacetylenic carboxylic acids. Polymerisation is preferably carried out with the aid of catalyst, e.g., alumina. In addition to dimeric carboxylic acid, the polymer obtained can also contain varying minor amounts of monomeric and trimeric carboxylic acids. Pure dimeric carboxylic acid is obtainable, however, by distillation. The dimeric carboxylic acid used for the preparation of the polyamides of the invention preferably has a dimeric carboxylic acid content of at least 60%, and more preferably a dimeric carboxylic acid content of at least from 70 to 90% by weight. The remainder comprises trimeric and higher polymeric components and monomeric carboxylic acid.

The diamines used in the manufacture of the polyamides employed in the present invention can be any suitable diamine which can provide a polyamide product of the desired molecular weight and/or physical and chemical properties. Preferred are the aliphatic diamines having from 2 to 6 carbon atoms (i.e., ethylene diamine to hexamethylene diamine), with ethylene diamine being the most preferred. When ethylene diamine is employed, the predominant structure of the dimer acid polyamide resin would comprise recurring units of the structural formula

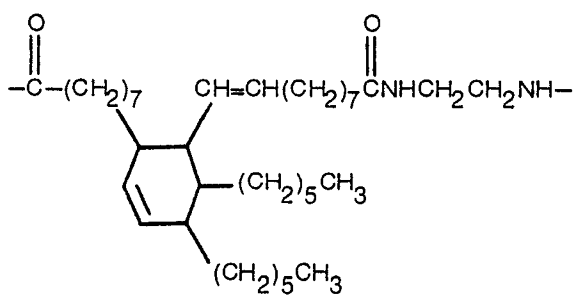
,

The cyclic ring and aliphatic side chains of the polyamide resin are believed to account for the polymer's excellent optical properties, i.e., optical homogeneity.

Suitable dimer acid polyamide materials for use in the erasable recording medium of the present invention are commercially available, e.g., from Union Camp Corporation under the Trade Mark Uni-Rez, and from Emery Industries, Inc. under the Trade Mark Emerez. Such low molecular weight dimer acid polyamides have heretofore been used as hot melt adhesives and in printing inks.

The following Table lists the physical properties of several such commercially-available and suitable resins. The viscosity measurements were made by a rotational viscometry technique using a Brookfield Synchro-Lectric Viscometer manufactured by Brookfield Engineering Laboratories, Inc., Stoughton, Mass. The thermogravimetric analyses in the Table were obtained with a du Pont Model 951 thermogravimetric analyser, with the samples maintained under a nitrogen atmosphere at a heating rate of 15°C/minute. In the Table, $M_w$ is the weight average molecular weight, determined with reference to calibrated polystyrene samples.

TABLE

DIMER ACID POLYAMIDES

| Resin | M.P. (Lit.) (°C) | Vicat S.P. (°C) | DSC M.P. (°C) | H Melt kJ/kg (Cal/g) | TGA T(10%)°C | Viscosity Lit (temp) | Pa.s (Poise) Brookfield (150°) | $\overline{M}_w$ |
|---|---|---|---|---|---|---|---|---|
| UNIREZ | | | | | | | | |
| 2931 | 110 | 72 | 105 | 23.4(5.6) | 391 | 3.0(30)(160) | 8.8(88) | 13,600 |
| 2940 | 110 | 70 | 107 | 20.1(4.8) | 385 | 1.5(15)(160) | 3.4(34) | 9,600 |
| 2942 | 102 | 54 | 92 | 2.9(0.6) | 407 | 1.6(16)(160) | 2.4(24) | — |
| 2961 | 142 | — | 104 | 15.9(3.8) | 382 | 0.1( 1)(160) | . . . | 3,200 |
| EMEREZ | | | | | | | | |
| 1530 | 110 | 57 | 108 | 24.3(5.8) | 398 | 2.4(24)(160) | 11.5(115) | 16,300 |
| 1533 | 104 | 54 | 87 | 8.4(2.0) | 385 | 3.3(33)(160) | 22.0(220) | 7,600 |
| 1540 | 110 | 78 | 110 | 26.0(6.2) | 394 | 1.6(16)(160) | 7.5( 75) | 15,500 |
| 1548 | 120 | 45 | 117 | 8.4(2.0) | 428 | 0.8( 8)(160) | 2.5(25) | 3,100 |
| 1549 | 120 | . . | . . . | . . . | 381 | 1.4(14)(160) | 3.8(38) | — |
| 1565 | 95 | . . | . . . | . . . | 403 | 0.5( 5)(190) | 4.0(40) | — |
| 1556 | 110 | . . | . . . | . . . | 394 | 0.8( 8)(190) | 11.0(110) | — |

As can be seen from the Table, the Vicat softening point for the materials examined falls within the range of from 45 to 78°C.

From the melt viscosity data obtained by measurement with a Brookfield viscometer at 150°C and the manufacturer's viscosity data, a temperature at which the viscosity of the polymer reaches 5 poise can be extrapolated using the relationship of the log of the viscosity vs 1/T. For the seven Emerez materials and the Unirez 2931, 2940 and 2942 materials a viscosity of 0.5 Pa.s (5 poise) is achieved in the range of 167 to 197°C. Such a melt viscosity in conjunction with the surface tension of the dimer acid polyamides employed in accordance with the present invention, which is generally at least $10^{-2}$ N/m (10 dynes/cm) in the temperature range of from 140 to 200°C allows for complete and accurate erasure to be quickly attained. (The surface tension of a polymer material can be measured by conventional methods. Examples of such methods include the capillary rise method, the drop weight method, the Wilhelmy plate method and the du Nouy method).

From the thermogravimetric analyses (TGA), it is seen that the thermal decomposition temperature of all the materials listed falls within the range of from 380 to 430°C. The TGA scans also indicated that the residue after complete thermal degradation is around 2% or less.

The substrate of the erasable recording medium of the present invention to which the dimer acid polyamide is applied is illustratively, and preferably, formed in the shape of a disc, a major surface of which is processed to be polished and flat. The substrate is made of a thermally stable material, which is also mechanically rigid and dimensionally stable and which ideally has an isotropically low coefficient of thermal expansion. Therefore, the recording medium does not warp during storage, writing, erasure or reading.

Depending upon the particular, conventional read mechanism employed, the substrate may be opaque, transparent or highly reflective regarding the read laser beam. It is also preferred that the substrate material be compatible with the polymer employed and that the polymer adhere well to the substrate. Good adhesion, for example, may be defined operationally as the inability to remove the coating from the substrate by means of adhesive tape, e.g. Scotch (Trade Mark) brand tape. Examples of suitable materials for the substrate include glass and polymethylmethacrylate.

If the polymer (polyamide) employed in the recording film is transparent at the predetermined wavelength of the laser output for writing, it is generally necessary to add a minor amount of a dye of appropriate absorption wavelength to the polymer in order to effect absorption of the incident radiation. If, for example, the writing is to be achieved with a helium-neon laser of 633 nm, then Oil Blue N dye, *Colour Index* 61555, $\lambda_{max}$ 637 nm, would be a suitable dye for incorporation into the polymer film. If, however, an argon laser is used which provides an output of a wavelength of about 458 nm, an organic dye such as fluorescein, which is highly absorptive at the light frequency of the argon laser, can advantageously be used. Other dyes which may be used include certain nigrosine dyes. Of course, it is preferred to employ dyes of suitable properties so as not to detrimentally affect the recordability and erasability of the recording machine.

The erasable recording medium of the present invention is prepared by coating the substrate with a film of the polyamide, or the polyamide and the dye. Since the read, write and erase steps all require operating within a very narrow depth of focus, the film when applied, must provide a very flat surface in order to avoid errors and noise. In order to facilitate the coating procedure, it is also generally advantageous that the polymer (and dye) be soluble in an organic solvent, such as an alcohol or ketone. In this regard, when a dye is used, the polymer and dye should be compatible and mutually co-soluble. Also, upon evaporation of the solvent, the dye should not precipitate in a particulate form, which particulates would cause a scattering of light.

Any suitable coating technique may be used to achieve such a flat surface, with a conventional technique such as spin coating, which allows for a high degree of control of film thickness and flatness being preferred. It is, of course, important that the polymer form a thin membrane coating.

For example, the polymer (i.e. the dimer acid polyamide resin employed in accordance with the present invention) may be readily cast from a toluene-propanol solution onto glass or polymethylmethacrylate to afford thin optically homogeneous (not cloudy) films. The films generally adhere well to glass and polymethylmethacrylate and cannot be removed via adhesive tape.

In an illustrative recording system embodying the principles of the present invention, a record blank of the above-described (disc) form is subject to rotation at a constant linear or constant angular velocity while a beam of light from a light source, e.g., a laser, is focused on the polymer surface of the disc. The intensity of the light beam is controlled in accordance with information to be recorded. Illustratively, the control is effected in accordance with carrier waves modulated in frequency by picture-representative video signals, with the light beam intensity varying as a result between a high level sufficient to effect ablation of the absorptive material and a low level insufficient to effect such ablation, the frequency of the level alternations varying as the video signal amplitude changes. Preferred writing speeds are in the range of from $10^6$ to $10^7$ bits per second.

The relative diameter and depth of the holes or pits formed by ablation will, of course, depend not only on the optical and thermal properties of the polymer or polymer/dye layer, but also on the characteristics of the writing beam, i.e., focused spot diameter, depth of focus, intensity profile and intensity and duration of the writing pulse. Methods of optimising these parameters are familiar to those skilled in the art. It is

preferred, however, that ablation of the polymer layer does not proceed as far as the substrate layer. If ablation is to proceed to the substrate, the substrate material employed is preferably glass or a metallised substrate or some other high surface energy substrate material.

As a result of the ablation of the polymeric material, an information track comprising a succession of spaced pits may be formed in the polymer surface of the disc, the pits appearing in those surface regions exposed to the high intensity beam due to vaporisation of the polymer layer material in response to the high intensity beam exposure. Variations in the length and separation of the pits are representative of the recorded information. Where a continuous sequence of pictures is to be recorded, a spiral information track may be formed by providing relative motion, in a radial direction and at a constant rate during the recording, between the recording beam and the rotating disc. Alternatively, in the absence of such relative motion during the recording, a circular information track may be formed appropriate for "slide" or freeze frame recording purposes.

The result of the above-described recording process is the formation of an information record of a form which facilitates recovery of the recorded information by optical playback processes. The information track of such an information record comprises (1) undisturbed surface regions alternating with (2) pit regions formed by the ablation process, due to complete, or at least partial, removal of the polymer layer coating of the substrate. This information track can be, for example, in either analogue or digital form.

In playback of read operations pursuant to the principles of the present invention, a light beam is focused upon the information track of a rotating information record of the above-described type. The playback beam has a constant intensity at a level insufficient to effect ablation of the polymer layer or erasure of the recorded information by levelling. A photodetector, positioned to received light reflected from the successive regions of the information track as they pass through the path of the focused light, develops a signal representative of the recorded information.

Several variations in the playback or reading system are possible with the erasable recording medium of the present invention. For example, the information can be read based upon the relative reflection from the surface of the polymer or polymer/dye layer of the disc. In this mode, when a beam from the read laser is focused on the surface of the disc, a part of the light is absorbed, but a fraction of the light is reflected. The reflected rays retrace their path back through a lens and are directed by a beamsplitter to a photodetector. When the read beam encounters a hole or pit created during the writing step, however, the rays are scattered and a lower intensity is reflected back towards the detector. Thus, a written bit is registered as a decrease in reflected intensity. Alternatively, the read beam can be focused at a level corresponding to the depth of the ablated hole (as predetermined), so that a bit is registered as an increase in reflected intensity. The chief function of the substrate in either of the aforediscussed modes is to provide mechanical support for the active layer since the substrate's reflectivity or transparency does not come into play. The substrate is preferably of a transparent nature when used in conjunction with such a playback system.

Information can also be read via a system attuned to the relative reflectance from the surface of the substrate. In this mode, the substrate must be of a reflective nature in the appropriate wavelength range. For example, the substrate can have a metallised surface, e.g. of aluminum, upon which the polymer is deposited. In operation, the read laser is focused on the highly-reflective surface. In the unwritten portions of the medium, i.e. those having no pits, a part of the incident beam is absorbed upon going through the polymer/dye layer and that part which is reflected from the surface does not retrace its path to be detected by a photodetector. In the recorded portions of the disc, i.e. those having the pits formed by ablation, the beam goes through a shorter distance of absorbing layer, and is reflected from the substrate reflective surface, so that a bit is registered as an increase in reflected intensity.

The read mode can also be adjusted to read in accordance with relative reflectance from the surface of the polymer layer and from the surface of the substrate. Again the substrate, when employing this mode, should be reflective. This concept or mode is described by D. G. Howe and J. J. Wrobel, in *J.Vac.Sci. Technol., 18,* 92 (1981). See also U.S. Patent No. 4,097,895.

When employing this mode, the recording medium should comprise a dyed polymer layer of a precise thickness which is coated onto a reflective, e.g., metallised, substrate. Writing is done at a wavelength where the dye absorbs and reading at a wavelength where the dye is transparent. In the read step, reflection occurs both from the surface of the dyed polymer and from the surface of the metallised substrate, and these reflections can combine either constructively or destructively at the surface of the polymer coating. If the thicknesses of the initial coating and of the coating remaining in the ablated hole are chosen correctly, then the combination is destructive in the unwritten areas and constructive in the ablated areas, so that a bit is registered as an increase in the intensity of reflected light.

Information can also be read, for example, based upon light transmission through the disc. In such a playback system, it is necessary for the substrate to be transparent. A recorded bit is registered as an increase in intensity of the light transmitted through the disc, since there is less absorbing dye in the path of the beam where the dye/polymer layer material has been ablated.

Due to the particular selected properties exhibited by the polymers comprising the polymer layer of the recording medium of the present invention, complete and accurate erasure of recorded information can readily and easily be accomplished. Erasure of the recorded information is readily carried out by heating the medium to a sufficiently high temperature for the dye/polymer layer to become fluid and the surface to

be levelled by surface tension forces, i.e. in the temperature range of from 140 to 200°C. This may be done globally by heating the entire medium (e.g. a disc) in an oven or some other suitable heating means, or by means of a laser beam whose intensity is intermediate between that of the write beam and read beam. It is generally necessary to heat an area considerably greater than that of a single bit (typically 1 µm in diameter), so that addressable (bit-by-bit) erasure can be difficult.

**Claims**

1. An ablative recording medium, suitable for use with a recording laser, comprising a thermally stable substrate and a recording polymer layer coated thereon, characterised in that the polymer layer comprises a dimer acid polyamide having a weight average molecular weight in the range from 2,000 to 20,000.

2. An ablative recording medium, suitable for use with a recording laser, comprising a thermally stable substrate and a recording polymer layer coated thereon, characterised in that the polymer layer comprises, a dimer acid polyamide having a surface tension, measured in N/m (dynes/cm), and a melt viscosity, measured in Pa.s (poise), in the temperature range of from 140 to 200°C, such that the ratio of said surface tension to melt viscosity at some point within said temperature range is at least 1:50 (2:1).

3. The recording medium of claim 2 wherein the dimer acid polyamide has a Vicat softening point of from 45 to 120°C and a temperature for the onset of thermal degradation of at least 250°C.

4. The recording medium of claim 2 or 3 wherein the surface tension and viscosity exhibited by the polymer are such that the ratio of surface tension to viscosity at some point in the temperature range from 140 to 200°C is at least 1:20 (5:1).

5. The recording medium of any of claims 2 —4 wherein the dimer acid polyamide has a weight average molecular weight in the range from 2,000 to 20,000.

6. The recording medium of claims 1 or 5 wherein the dimer acid polyamide has a weight average molecular weight in the range from 2,500 to 18,000.

7. The recording medium of claim 6 wherein the dimer acid polyamide has a weight average molecular weight in the range from 3,000 to 16,000.

8. The recording medium of any of claims 1—7 wherein said dimer acid polyamide polymer layer coated on the substrate further comprises a dye material which is absorptive at the frequency of the recording laser.

9. The recording medium of any of claims 1—8 wherein the substrate comprises glass or polymethylmethacrylate.

10. The recording medium of any of claims 1—9 wherein the substrate has a top layer adjacent the polymer layer which is a metallised reflective layer, thereby rendering the substrate reflective.

11. The recording medium of any of claims 1—10 wherein the substrate is transparent.

12. The recording medium of any of claims 1—7 wherein the recording medium is in the form of a disc.

13. An optically readable and erasable information disc being the recording medium of claim 12 wherein the polymer layer is an information track comprising a succession of spaced pits.

14. An erasable information medium, useful with play back apparatus employing playback beam of light of a predetermined frequency, said medium comprising an ablative recording medium according to any one of claims 1 to 12, wherein: th substrate has a light reflective surface; and there is an information track comprising a succession of pits formed in said dimer acid polyamide layer, wherein the thickness of said dimer acid polyamide layer in all regions of the information medium other than those occupied by said pits is a given thickness chosen so that, when reflection occurs both from the surface of the polymer layer and the surface of the substrate, the reflections combine destructively at the surface of the polymer layer.

15. A method of recording information in a thin film deposited on a relatively thick substrate by irradiating the film with a laser beam in accordance with said information to form pits in the film, characterised in that the film comprises dimer acid polyamide as defined in any of claims 1—7.

16. A method of erasing a deformation information pattern applied to the recording medium of any of claims 1—12 which comprises heating the polymer layer to erase the deformation pattern.

17. The method of claim 16 wherein the polymer layer is heated to a temperature in the range from 140 to 200°C sufficient to effect levelling of the polymer layer.

18. The method of claim 16 or 17 wherein the polymer layer is heated during erasure to a temperature at least 50°C below the temperature used in recording the information.

**Patentansprüche**

1. Reversibles Aufzeichnungsmedium, das für den Einsatz mit einem aufzeichnenden Laser geeignet ist, umfassend ein thermisch stabiles Substrat und darauf aufgetragen eine Schicht eines aufzeichnenden Polymers, dadurch gekennzeichnet, daß die Polymer-Schicht ein Dimer-Säure-Polyamid mit einem Gewichtsmittel des Molekular-gewichts im Bereich von 2 000 bis 20 000 umfaßt.

2. Reversibles Aufzeichnungsmedium, das für den Einsatz mit einem aufzeichnenden Laser geeignet ist, umfassend ein thermisch stabiles Substrat und darauf aufgetragen eine Schicht, eines aufzeichnenden Polymers, dadurch gekennzeichnet, daß die Polymer-Schicht ein Dimer-Säure-Polyamid mit einer solchen Oberflächenspannung, gemessen in N/m (dyn/cm), und einer solchen Schmelzviskosität, gemessen in Pa·s

(Poise), im Temperatur-Bereich von 140°C bis 200°C aufweist, daß das Verhältnis der Oberflächenspannung zu der Schmelzviskosität an einem Punkt innerhalb des genannten Temperatur-Bereichs wenigstens 1:50 (2:1) beträgt.

3. Aufzeichnungsmedium nach Anspruch 2, worin das Dimer-Säure-Polyamid einen Vicat-Erweichungspunkt im Bereich von 45°C bis 120°C und eine Temperatur für den Beginn des thermischen Abbaus von wenigstens 250°C besitzt.

4. Aufzeichnungsmedium nach den Ansprüchen 2 oder 3, worin das Polymer eine solche Oberflächenspannung und eine solche Schmelzviskosität zeigt, daß das Verhältnis der Oberflächenspannung zu der Schmelzviskosität an einem Punkt innerhalb des Temperatur-Bereichs von 140°C bis 200°C wenigstens 1:20 (5:1) beträgt.

5. Aufzeichnungsmedium nach irgendeinem der Ansprüche 2 bis 4, worin das Dimer-Säure-Polyamid ein Gewichtsmittel des Molekulargewichts im Bereich von 2 000 bis 20 000 hat.

6. Aufzeichnungsmedium nach den Ansprüchen 1 oder 5, worin das Dimer-Säure-Polyamid ein Gewichtsmittel des Molekulargewichts im Bereich von 2 500 bis 18 000 hat.

7. Aufzeichnungsmedium nach Anspruch 6, worin das Dimer-Säure-Polyamid ein Gewichtsmittel des Molekulargewichts im Bereich von 3 000 bis 16 000 hat.

8. Aufzeichnungsmedium nach irgendeinem der Ansprüche 1 bis 7, worin die auf das Substrat aufgetragene Polymer-Schicht des Dimer-Säure-Polyamids weiterhin ein Farbstoff-Material umfaßt, das bei der Frequenz des aufzeichnenden Lasers absorbiert.

9. Aufzeichnungsmedium nach irgendeinem der Ansprüche 1 bis 8, worin das Substrat Glas oder Polymethylmethacrylat umfaßt.

10. Aufzeichnungsmedium nach irgendeinem der Ansprüche 1 bis 9, worin das Substrat eine der Polymer-Schicht benachbarte obere Schicht hat, die eine metallisierte reflektierende Schicht ist und dadurch das Substrat reflektierend macht.

11. Aufzeichnungsmedium nach irgendeinem der Ansprüche 1 bis 10, worin das Substrat transparent ist.

12. Aufzeichnungsmedium nach irgendeinem der Ansprüche 1 bis 7, worin das Aufzeichnungsmedium die Form einer Scheibe hat.

13. Optisch lesbare und löschbare Informations-Scheibe, die das Aufzeichnungsmedium nach Anspruch 12 ist, worin die Polymer-Schicht eine Informationsspur bildet, die eine Anordnung in Abständen zueinander vorliegender Vertiefungen umfaßt.

14. Löschbares Informations-Medium, das verwendbar ist mit einem Abspielgerät das einen Lese-Lichtstrahl einer voreingestellten Frequenz verwendet, wobei das Medium ein reversibles Aufzeichnungsmedium nach irgendeinem der Ansprüche 1 bis 12, wobei das Substrat eine licht-reflektierende Oberfläche besitzt, und es eine Informationsspur mit einer Folge von Vertiefungen gibt, die in der Schicht aus dem Dimer-Säure-Polyamid gebildet sind, wobei die Dicke der Dimer-Säure-Polyamid-Schicht in allen Bereichen des Informationsmediums, mit Ausnahme derjenigen, die von den Vertiefungen eingenommen werden, eine gegebene Dicke ist, die so gewählt ist, daß bei Auftreten einer Reflexion sowohl von der Oberfläche der Polymer-Schicht als auch von der reflektierenden Oberfläche des Substrats diese Reflexionen sich an der Oberfläche der Polymer-Schicht destruktiv kombinieren.

15. Verfahren zur Aufzeichnung von Information in einem dünnen Film, der auf einem relativ dicken Substrat abgelagert ist, durch Bestrahlen des Films mit einem der Information entsprechenden Laser-Strahl, wodurch Vertiefungen in dem Film gebildet werden, dadurch gekennzeichnet, daß der Film ein Dimer-Säure-Polyamid nach irgendeinem der Ansprüche 1 bis 7 umfaßt.

16. Verfahren zum Löschen eines auf dem Aufzeichnungsmedium nach irgendeinem der Ansprüche 1 bis 12 aufgebrachten Deformations-Informationsmusters, umfassend das Erhitzen des Polymers zum Löschen des Deformations-Informationsmusters.

17. Verfahren nach Anspruch 16, worin die Polymer-Schicht auf eine Temperatur im Bereich von 140°C bis 200°C erhitzt wird, um das Verlaufen des Polymers zu bewirken.

18. Verfahren nach den Ansprüchen 16 oder 17, worin die Polymer-Schicht während des Löschens auf eine Temperatur von wenigstens 50°C unterhalb der bei der Aufzeichnung der Information verwendeten Temperatur erhitzt wird.

**Revendications**

1. Matériel d'enregistrement par ablation, approprié à une utilisation avec un laser d'enregistrement, comprenant un substrat thermiquement stable et une couche d'un polymère d'enregistrement qui y est enduite, caractérisé en ce que la couche du polymère comprend un polyamide acide dimère ayant un poids moléculaire moyen en poids compris entre 2 000 et 20 000.

2. Matériel d'enregistrement par ablation approprié pour une utilisation avec un laser d'enregistrement, comprenant un substrat thermiquement stable et une couche d'un polymère d'enregistrement qui y est enduite, caractérisé en ce que la couche du polymère comprend un polyamide acide dimère ayant une tension de surface, mesurée en N/m (dynes/cm) et une viscosité en phase fondue, mesurée en Pa.s (poise) dans la plage de températures de 140 à 200°C, de manière que le rapport de ladite tension de surface à la viscosité en phase fondue en un certain point dans ladite plage de températures soit

d'au moins 1:50 (2:1).

3. Matériel d'enregistrement selon la revendication 2, où le polyamide acide dimère a un point d'amollissement Vicat de 45 à 120°C et une température pour le départ de la dégradation thermique d'un moins 250°C.

4. Matériel d'enregistrement de la revendication 2 ou 3, où la tension de surface et la viscosité présentées par ledit polymère sont telles que le rapport de la tension de surface à la viscosité en un certain point dans la plage de températures de 140 à 200°C soit d'au moins 1:20 (5:1).

5. Matériel d'enregistrement selon l'une quelconque des revendications 2—4, où la polyamide acide dimère a un poids moléculaire moyen en poids compris entre 2 000 et 20 000.

6. Matériel d'enregistrement des revendications 1 ou 5, où le polyamide acide dimère a un poids moléculaire moyen en poids compris entre 2 500 et 18 000.

7. Matériel d'enregistrement de la revendication 6, où le polyamide acide dimère a un poids moléculaire moyen en poids compris entre 3 000 et 16 000.

8. Matériel d'enregistrement selon l'une des revendications 1—7, où ladite couche du polymère de polyamide acide dimère enduite sur le substrat contient de plus un matériau colorant qui est absorbant à la fréquence du laser d'enregistrement.

9. Matériel d'enregistrement selon l'une des revendications 1—8, où le substrat comprend du verre ou du polyméthylméthacrylate.

10. Matériel d'enregistrement de l'une des revendications 1—9, où le substrat a une couche supérieure adjacente à la couche du polymère qui est une couche réfléchissante métallisée, pour ainsi rendre le substrat réfléchissant.

11. Matériel d'enregistrement selon l'une des revendications 1—10, où le substrat est transparent.

12. Matériel d'enregistrement selon l'une des revendications 1—7, où le matériel d'enregistrement a la forme d'un disque.

13. Disque d'information optiquement lisible et effaçable qui est le matériel d'enregistrement de la revendication 12, où la couche du polymère est une piste de l'information comprenant une succession de trous espacés.

14. Matériel d'information effaçable, utile avec un appareil de restitution employant un faisceau de lumière de restitution d'une fréquence prédéterminée, ledit matériel comprenant un matériel d'enregistrement par ablation selon l'une quelconque des revendications 1 à 12, où: le substrat a une surface réfléchissant la lumière; et il y a une piste de l'information comprenant une succession de trous formés dans ladite couche de polyamide acide dimère, où l'épaisseur de ladite couche de polyamide acide dimère dans toutes les régions du matériel d'information autres que celles occupées par lesdits trous est une épaisseur donnée choisie de manière que lorsqu'une réflexion se produit à la fois par la surface de la couche du polymère et la surface du substrat, les réflexions se combinent par destruction à la surface de la couche du polymère.

15. Méthode d'enregistrement de l'information dans un film mince déposé sur un substrat relativement épais par irradiation du film par un faisceau laser selon ladite information pour former des trous dans le film, caractérisé en ce que le film comprend un polyamide acide dimère tel que défini selon l'une quelconque des revendications 1—7.

16. Méthode d'effacement d'un schéma d'information par déformations appliqué au matériel d'enregistrement selon l'une des revendications 1—12, qui consiste à chauffer la couche du polymère pour effacer le schéma de déformations.

17. Méthode de la revendication 16, où la couche du polymère est chauffée à une température comprise entre 140 et 200°C, suffisante pour effectuer un nivellement de la couche du polymère.

18. Méthode de la revendication 16 ou 17, où la couche du polymère est chauffée pendant l'effacement à une température qui est au moins 50°C en-dessous de la température utilisée dans l'enregistrement de l'information.